# EUROPEAN PATENT SPECIFICATION

(11) **EP 3 916 865 B1**
(45) Date of publication and mention of the grant of the patent: **29.10.2025**
(21) Application number: 20878093.2
(22) Date of filing: 11.08.2020
(51) Int. Cl.: H01M 50/207, H01M 10/04, H01M 4/80, H01M 4/74, H01M 4/02

(54) **SECONDARY BATTERY HAVING STRUCTURE IN WHICH UNIT CELLS WHICH BECOME THINNER IN ONE DIRECTION ARE RADIALLY ASSEMBLED, AND DEVICE COMPRISING SAME**
SEKUNDÄRBATTERIE MIT EINER STRUKTUR, BEI DER IN EINE RICHTUNG DÜNNER WERDENDE EINHEITSZELLEN RADIAL ANGEORDNET SIND, UND VORRICHTUNG DAMIT
BATTERIE SECONDAIRE AYANT UNE STRUCTURE DANS LAQUELLE DES CELLULES UNITAIRES QUI DEVIENNENT PLUS MINCES DANS UNE DIRECTION SONT ASSEMBLÉES RADIALEMENT, ET DISPOSITIF LA COMPRENANT

(30) Priority: 25.10.2019 KR 20190133561
(43) Date of publication of application: 01.12.2021
(73) Proprietor: LG Energy Solution, Ltd., Seoul 07335 (KR)
(72) Inventor: KO, Yo Han, Daejeon 34122 (KR); LEE, Jung Noh, Daejeon 34122 (KR); PARK, Jong Pil, Daejeon 34122 (KR)
(74) Representative: Plasseraud IP
(86) International application number: PCT/KR2020/010615
(87) International publication number: WO 2021/080137

(56) References cited:
- JP-A- 2000 311 693
- JP-A- 2003 208 917
- JP-A- 2010 102 962
- JP-A- 2014 007 108
- JP-A- H07 130 344
- JP-A- H07 130 344
- JP-A- S5 165 331
- KR-A- 20060 015 060
- KR-A- 20060 015 060
- KR-A- 20070 105 114
- KR-A- 20170 022 289

## Description

### [Technical Field]

The present invention relates to a secondary battery including a structure in which unit cells whose thickness decreases in one direction are radially assembled, and a device including the same.

This application claims the benefit of priority based on Korean Patent Application No. 10-2019-0133561, filed on October 25, 2019.

### [Background Art]

As the price of energy sources increases due to the depletion of fossil fuels, and interest in environmental pollution is amplified, the demand for eco-friendly alternative energy sources is increasing. In particular, as technology development and demand for mobile devices increase, the demand for secondary batteries as energy sources is rapidly increasing. As the demand for secondary batteries is diversified and increased, there is a demand for new types of secondary batteries.

In addition, in the case of a lithium secondary battery, lithium ions in an electrolyte solution generally exhibit high ion conductivity in a specific concentration range, and when the concentration is thinner or thicker than this, the ion conductivity decreases. The concentration of electrolyte solution or lithium ions inside the lithium secondary battery is not constant, and depending on the operating conditions of the battery, the concentrations of lithium ions near the positive electrode and the negative electrode behave in opposite directions.

Therefore, there is a need for a new type of secondary battery technology that solves this problem.

JP H07 130344, JP 2010 102962, JP 2014 007108 and JP S51 65331 disclose a secondary battery having a structure in which 16 unit cells are radially assembled around a central axis based on a horizontal cross-sectional structure. KR 2017 0022289 discloses an electrode assembly comprising electrode having gradient in loading amount of active material. KR 2006 0015060 discloses an electrode plate of secondary battery.

### [Disclosure]

### [Technical Problem]

The present invention was invented to solve the above problems, and an object of the present invention is to provide a new type of secondary battery including a structure in which unit cells whose thickness decreases in one direction are radially assembled, and a device including the same.

### [Technical Solution]

In one example, a secondary battery according to the present invention is formed as n (n is an integer of 5 or more) unit cells are radially assembled around a central axis based on a horizontal cross-sectional structure. Herein, each unit cell has a structure in which a thickness decreases in a direction toward the central axis from an outer end that forms an outer peripheral surface of the secondary battery based on the horizontal cross-sectional structure.

In a specific example, in the secondary battery, a k-th (k is an integer between 1 and n-1) unit cell and a (k+1)-th unit cell are adjacent to each other and face each other. Further, a first unit cell and an n-th (n is an integer between 5 and 10000) unit cell are also adjacent to each other and face each other. The n value may vary depending on the size of the device to be applied. For mobile or small devices, n may be 1000 or less, and in the case of large cells for vehicles, etc., the unit cells may be aggregated in the range of 1000 to 10000.

In one example, the secondary battery has a cylindrical structure in which n unit cells are radially assembled around the central axis to form a hollow based on the horizontal cross-sectional structure, wherein the n is an integer of 5 or more, and wherein a diameter ratio of inner and outer diameters of the secondary battery is in a range of 1 : 1.1 to 100.

In yet another example, in each unit cell forming a battery, the ratio (Dᵢₙ: Dₒᵤₜ) of the thickness (Dᵢₙ) of the inner end forming the inner peripheral surface of the battery in the center direction and the thickness (Dₒᵤₜ) of the outer end forming the outer peripheral surface of the battery is in the range of 1 : 1.1 to 100, based on the horizontal cross-sectional structure.

In a specific example, in each unit cell forming the battery, at least one of a positive electrode and a negative electrode has a structure in which a distance between electrodes decreases in a center direction from the outer end that forms an outer peripheral surface of the battery based on the horizontal cross-sectional structure.

According to the invention, each unit cell comprises a positive electrode and a negative electrode, and each of the positive electrode and the negative electrode has a structure in which a mixture layer including an active material is applied on a metal current collector, and wherein at least one of the positive electrode or the negative electrode has a structure in which a thickness of the mixture layer applied on the metal current collector decreases in a direction toward the central axis from the outer end that forms the outer peripheral surface of the battery, based on the horizontal section structure.

According to the invention, in each unit cell, at least one of the positive electrode or the negative electrode has a structure in which a density of the mixture layer increases in a direction toward the central axis from the outer end that forms the outer peripheral surface of the battery, based on the horizontal section structure.

In one example, each unit cell includes a positive electrode and a negative electrode, and a first separator is interposed between the positive electrode and the negative electrode, and wherein a second separator is interposed between the unit cells.

In a specific example, each of the positive electrode and the negative electrode includes: a current collector; and a mixture layer including an active material disposed on the current collector one a surface facing the first separator.

In one example, in each unit cell, at least one of a positive electrode or a negative electrode includes a metal current collector having a porous structure in which through holes are formed in a thickness direction.

In a specific example, in each unit cell forming the battery, a metal current collector forming at least one of a positive electrode and a negative electrode has a porous structure in which a through-thickness hole is formed, and an area ratio of the through holes on a surface of the metal current collector is in a range of 10 to 80%.

For example, the metal current collector having the porous structure is in a form of a mesh.

In further another example, the present invention provides a device including the above-described secondary battery. Specifically, the device may include a mobile device, a wearable device, a power tool that moves by receiving power by a battery-based motor, a drone, or an Electric Vehicle (EV), a Hybrid Electric Vehicle (HEV), a Plug-in Hybrid Electric Vehicle (PHEV), an Electric Bike (E-bike), an Electric Scooter (E-scooter), an Electric Golf Cart (electric golf cart) or a power storage system.

### [Advantageous Effects]

A secondary battery and a device including the same according to the present invention propose a new structure in which unit cells whose thickness decreases in one direction are radially assembled, and when a current collector with a through-type hole formed in the thickness direction is applied, the variation in concentration of the electrolyte solution in the battery can be reduced, thereby improving battery performance.

### [Brief Description of the Drawings]

FIG. 1 is a schematic diagram showing a cross-sectional structure of a secondary battery according to an embodiment of the present invention.
FIGS. 2 and 3 are partially enlarged views showing cross-sectional structures of an electrode assembly in a horizontal direction and a vertical direction, respectively, according to an embodiment of the present invention.
FIGS. 4 and 5 are graphs showing results of comparing and evaluating voltage and temperature changes during charging and discharging of a secondary battery according to an embodiment of the present invention, respectively.

### [Detailed Description of the Preferred Embodiments]

Hereinafter, the present invention will be described in detail with reference to the drawings. The terms and words used in the present specification and claims should not be construed as limited to ordinary or dictionary terms and the inventor may properly define the concept of the terms in order to best describe its invention. The terms and words should be construed as meaning and concept consistent with the technical idea of the present invention.

In addition, the meaning of "cylindrical" or "circular" in the present invention includes not only the case of a physical cylindrical or circular shape, but also a case in which the overall shape is close to a cylinder or a circle. For example, in the case that the cross-sectional shape of a battery is n-gonal shaped, if n is 5 or more, or 10 or more, it should be interpreted as being included in the circular category.

In the present invention, based on a horizontal cross-sectional structure, n (n is an integer of 5 or more) unit cells are radially assembled around a central axis to form a battery. Herein, each unit cell provides a secondary battery having a structure in which a cell thickness decreases in a direction of a central axis from an outer end forming an outer peripheral surface of the battery based on a horizontal cross-sectional structure. In the secondary battery according to the present invention, a plurality of unit cells are radially assembled to form a battery. The shape of the secondary battery may have a circular shape or a shape close to it, an n-gonal shape, or a fan shape, based on a horizontal cross-sectional structure.

The number n of unit cells collected in the secondary battery is an integer of 5 or more, and specifically in the range of 5 to 10000, 5 to 100, 100 to 1000, 1000 to 10000, 500 to 5000, or 3000 to 10000. The number n of the unit cells can be variously designed according to the shape, structure, or required physical properties of the battery.

In one embodiment, in the secondary battery, the k-th (k is an integer between 1 and n-1) unit cell and the k+1-th unit cell are adjacent to each other and face each other. In addition, the first unit cell and the n-th unit cell (n is an integer between 5 and 10000) are also adjacent to each other and face each other. For example, in the secondary battery, a plurality of unit cells may be radially assembled to form a cylindrical structure. In this case, the outer peripheral surface of the cylindrical structure is determined by the number of unit cells, and a circular or n-gonal shape can be formed based on the cross section.

In one embodiment, the secondary battery may have a structure in which a hollow penetrating in a vertical direction is formed in the center of the secondary battery as a whole and the exterior has a cylindrical shape. Specifically, the secondary battery has a cylindrical structure in which n unit cells (n is an integer of 5 or more) are radially aggregated around a central axis to form a hollow based on a horizontal cross-sectional structure. In addition, the secondary battery has a diameter ratio of an inner diameter and an outer diameter of 1 : 1.1 to 100. The diameter ratio of the inner diameter and the outer diameter of the secondary battery is calculated based on the average values of the inner diameters and the outer diameters, respectively. In a specific example, the secondary battery has a diameter ratio of the inner diameter and the outer diameter of the battery in the range of 1 : 1.1 to 100, 1 : 1.5 to 80, 1 : 2 to 50, 1 : 10 to 100, or 1 : 30 to 100.

In yet another embodiment, in each unit cell forming a battery, the ratio (Dᵢₙ: Dₒᵤₜ) of the thickness (Dᵢₙ) of the inner end forming the inner peripheral surface of the battery in the center direction and the thickness (Dₒᵤₜ) of the outer end forming the outer peripheral surface of the battery is in the range of 1 : 1.5 to 10, based on the horizontal section structure. In a specific example, the ratio (Dᵢₙ: Dₒᵤₜ) is in the range of 1 : 1.1 to 100, 1 : 1.5 to 80, 1 : 2 to 50, 1 : 10 to 100, or 1 : 30 to 100.

The unit cell included in the secondary battery according to the present invention has a shape in which the thickness decreases in one direction. This is a form differentiated from conventional prismatic batteries, pouch-type batteries, or cylindrical batteries. Existing secondary batteries have a difference in external shape, but unit cells constituting each battery are manufactured with a uniform overall thickness, but are merely different in a stacked form or a winding form. In one embodiment, in each unit cell forming the battery, at least one of the positive electrode and the negative electrode has a structure in which the distance between the electrodes decreases in the center direction from the outer end that forms the outer peripheral surface of the battery based on the horizontal cross-sectional structure.

In addition, by applying a structure in which the unit cells in the form in which the thickness decreases in one direction and the unit cells having a uniform thickness are assembled together, a secondary battery applicable to various types of devices can be manufactured. For example, in the case of a mobile smart watch, a secondary battery that can be stored inside the watch band may be applied. Herein, the watch band may be formed in a form in which a straight section area and a curved section area are combined. At this time, by using a secondary battery having a structure in which unit cells of uniform thickness are assembled in the straight section area of the watch band and unit cells whose thickness decreases in one direction are assembled in the curved section area, a secondary battery of a desired shape can be easily manufactured.

In a specific embodiment, in each unit cell forming a battery, a positive electrode and a negative electrode each have a structure in which a mixture layer including an active material is applied on a metal current collector. Further, at least one of the positive electrode and the negative electrode has a structure in which the thickness of the mixture layer applied on the metal current collector decreases in the direction of the central axis at the outer end forming the outer peripheral surface of the battery based on the horizontal cross-sectional structure. That is, the present invention is designed to increase or decrease the thickness of the material mixture layer loaded on the current collector in one direction, thereby imparting thickness orientation to the unit cell.

According to the invention, in each unit cell forming a battery, a positive electrode and a negative electrode each have a structure in which a mixture layer including an active material is applied on a metal current collector. Further, at least one of the positive electrode and the negative electrode has a structure in which the density of the mixture layer applied on the metal current collector increases in the direction of the central axis from the outer end forming the outer peripheral surface of the battery based on the horizontal cross-sectional structure. As described above, when the present invention is designed to increase or decrease the thickness of the material mixture layer loaded in the current collector in one direction, capacity nonuniformity may occur depending on the location or direction of the unit cells. In the present invention, by designing to decrease the density of the mixture layer loaded in the current collector in one direction, it is possible to compensate for the capacity unevenness according to the thickness orientation in the unit cell. For example, in an area in which the thickness of the mixture layer laminated on the current collector is small, the density of the mixture layer may be set to be high. The density orientation of the mixture layer can be realized by pressing or depressurizing in one direction when pressing with a roller while uniformly loading the mixture layer on the current collector.

In one embodiment, each unit cell constituting the secondary battery according to the present invention includes a positive electrode and a negative electrode, a first separator is interposed between the positive electrode and the negative electrode, and a second separator is interposed between the unit cells. In this case, the positive electrode and the negative electrode may have a structure in which a mixture layer including an active material is laminated on one surface of a current collector in a direction facing the first separator.

Specifically, in each unit cell forming a battery, a metal current collector forming at least one of a positive electrode and a negative electrode has a porous structure in which a through-thickness hole is formed. In the secondary battery according to the present invention, by applying a current collector having a through-type hole formed in the thickness direction to a unit cell, it is possible to improve the performance of the battery by reducing the width of change in the concentration of the electrolyte or lithium ions in the battery. In the present invention, by applying the current collector in which the through-type hole in the thickness direction is formed to the unit cell, the lithium ion concentration in the electrolyte solution can be uniformly maintained within a certain range. Through this, it is possible to increase battery performance by reducing an electrolyte-related overvoltage factor among overvoltage factors of a battery.

In one embodiment, in each unit cell forming a battery, a metal current collector forming at least one of a positive electrode and a negative electrode has a porous structure in which a through-thickness hole is formed, and the area fraction in which the through-type hole is formed is in the range of 10 to 80%. Specifically, the area fraction in which the through hole is formed is in the range of 10 to 80%, 10 to 70%, 10 to 50%, 20 to 90%, 30 to 90%, or 30 to 60%. By controlling the number or area fraction per unit area of through holes in the above range, it is possible to reduce the deformation rate of the current collector and reduce the range of change of the electrolyte solution concentration and the lithium ion concentration in the battery without a significant decrease in mechanical strength.

In a specific example, the through hole has a structure in which 10 to 500 holes are formed per unit area of 10 cm x 10 cm. Specifically, the number of through holes per unit area may be 10 to 300, 10 to 200, 10 to 100, 10 to 70, 30 to 50, 50 to 500, 100 to 200, 50 to 300, 100 to 500, 30 to 200, or 10 to 200. For example, the metal current collector has a mesh shape.

The secondary battery in the present invention is, for example, a lithium secondary battery. The lithium secondary battery may include, for example, an electrode assembly described above; a non-aqueous electrolyte impregnating the electrode assembly; and a battery case containing the electrode assembly and the non-aqueous electrolyte.

The positive electrode has a structure in which a positive electrode mixture layer is stacked on one or both sides of a positive electrode current collector. The positive electrode active materials may each independently be a lithium-containing oxide, and may be the same or different. A lithium-containing transition metal oxide may be used as the lithium-containing oxide. In one example, the positive electrode mixture layer includes a conductive material and a binder polymer in addition to the positive electrode active material, and if necessary, may further include a positive electrode additive commonly used in the art.

The current collector used for the positive electrode is a metal having high conductivity, and any metal which the positive electrode active material slurry may be easily attached to and which is not reactive in the voltage range of the secondary battery can be used. Specifically, non-limiting examples of the current collector for the positive electrode include aluminum, nickel, or a foil manufactured by a combination thereof. Specifically, the current collector for the positive electrode is formed of metal components described above, and includes a metal plate having a through hole in the thickness direction, and an ion conductive porous reinforcing material filled in the through hole of the metal plate.

The negative electrode may further include a negative electrode mixture layer, and may include a carbon material, lithium metal, silicon, or tin. When a carbon material is used as the negative electrode active material, both low crystalline carbon and high crystalline carbon may be used. Representative examples of low crystalline carbon include soft carbon and hard carbon are typical. Representative examples of high crystalline carbon include natural graphite, kish graphite, pyrolytic carbon, mesophase pitch based carbon fiber, mesocarbon microbeads, mesophase pitches, and high-temperature calcined carbons such as petroleum or coal tar pitch derived cokes.

Non-limiting examples of the current collector used for the negative electrode include copper, gold, nickel, or a foil manufactured by a copper alloy or a combination thereof. In addition, the current collector may be used by stacking substrates made of the above materials. Specifically, the current collector for the negative electrode is formed of metal components described above, and includes a metal plate having a through hole in the thickness direction, and an ion conductive porous reinforcing material filled in the through hole of the metal plate.

In addition, the negative electrode may include a conductive material and a binder commonly used in the art.

The first and second separators may be made of any porous substrate used in a lithium secondary battery, and for example, a polyolefin-based porous membrane or a nonwoven fabric may be used, but the present invention is not particularly limited thereto. Examples of the polyolefin-based porous membrane include polyethylene such as high density polyethylene, linear low density polyethylene, low density polyethylene, ultra high molecular weight polyethylene, and a membrane in which polyolefin-based polymers, such as polypropylene, polybutylene, and polypentene, are each formed alone or in a mixture thereof.

According to an embodiment of the present invention, the electrolyte may be a non-aqueous electrolyte. Examples of the solvent for the non-aqueous electrolyte include N-methyl-2-pyrrolidinone, propylene carbonate, ethylene carbonate, butylenecarbonate, dimethyl carbonate, diethyl carbonate, gamma-Butyrolactone, 1,2-dimethoxyethane, tetrahydroxyfuran, 2-methyltetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxymethane, dioxolane derivatives, sulfolane, methyl sulfolane, 1,3-dimethyl-2-imidazolidinone, propylene carbonate derivatives, tetrahydrofuran derivatives, ethers, methyl pyrophosphate, ethyl propionate, etc. However, it is not particularly limited thereto, and a number of electrolyte components commonly used in the field of lithium secondary batteries may be added or subtracted within an appropriate range.

In addition, the present invention provides a device including the secondary battery described above. In a specific example, the device includes a mobile device, a wearable device, a power tool that moves by receiving power by a battery-based motor, a drone, or an Electric Vehicle (EV), a Hybrid Electric Vehicle (HEV), a Plug-in Hybrid Electric Vehicle (PHEV), an Electric Bike (E-bike), an Electric Scooter (E-scooter), an Electric Golf Cart (electric golf cart) or a power storage system.

For example, when the secondary battery of the present invention is included in a smart watch that is a mobile electronic device, conventional pouch-type batteries require stacking multiple thin electrodes on a flat surface, but the secondary batteries of the present invention can be manufactured in a hollow structure by itself, so that they are suitable to be manufactured according to the shape of a watch band. In addition, it can be applied to ultra-small devices such as wireless earphones because it can achieve high capacity compared to its size. On the other hand, since it is easy to adjust the size according to the number of unit cells assembled, it can be applied to large cylindrical batteries for electric vehicles.

Hereinafter, the present invention will be described in more detail through examples and drawings. However, the embodiments described in the specification and the configurations described in the drawings are only the most preferred embodiments of the present invention, and do not represent all of the technical ideas of the present invention. It is to be understood that there may be various equivalents and variations in place of them at the time of filing the present application.

### Example 1

100 parts by weight of NCM (LiNi_{0.8}Co_{0.1}Mn_{0.1}O₂) as a positive electrode active material, 1.5 parts by weight of carbon black (FX35, Denka) as a conductive material, and 2.3 parts by weight of polyvinylidene fluoride (KF9700, Kureha) as a binder polymer were added to NMP (N-methyl-2-pyrrolidone) as a solvent to thereby prepare a positive electrode mixture layer slurry. The positive electrode mixture layer slurry was coated on one side of an aluminum current collector with through holes in a thickness direction in a loading amount of 640 mg/25 cm² and then vacuum-dried to thereby obtain a positive electrode. In the aluminum current collector, the through-type holes are formed in an area fraction of about 40%, and about 50 holes are formed per unit area of 10 cm x 10 cm. In addition, the positive electrode mixture layer was pressed to decrease sequentially to a thickness of about 40% in one direction.

100 parts by weight of artificial graphite (GT, Zichen (China)) as a negative electrode active material, 1.1 parts by weight of carbon black (Super-P) as a conductive material, 2.2 parts by weight of styrene-butadiene rubber, and 0.7 parts by weight of carboxy methyl cellulose were added to water as a solvent to prepare a negative electrode material slurry, and was then coated, dried and pressed on one side of a copper current collector with through holes in a thickness direction, to thereby manufacture a negative electrode. In the copper current collector, the through-type holes are formed in an area fraction of about 40%, and about 50 holes are formed per unit area of 10 cm x 10 cm. In addition, the negative electrode mixture layer was pressed to decrease sequentially to a thickness of about 40% in one direction.

On the other hand, polypropylene was uniaxially stretched using a dry method to prepare a separator having a microporous structure having a melting point of 165°C and a width of 200 mm on one side. unit cells having a structure in which the first separator was interposed between the positive electrode and the negative electrode, and the second separator was located outside the positive electrode and the negative electrode were repeatedly assembled to prepare an electrode assembly. The electrode assembly has a structure in which 50 unit cells are radially assembled around a central axis based on a horizontal cross-sectional structure.

After the electrode assembly was built into a hollow cylindrical battery case, a 1M LiPF₆ carbonate-based solution electrolyte was injected to complete a battery.

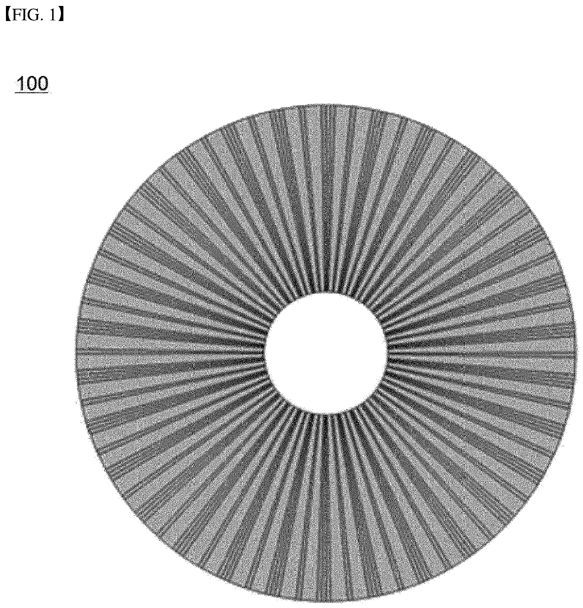

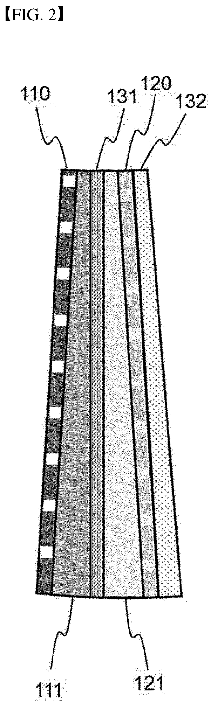

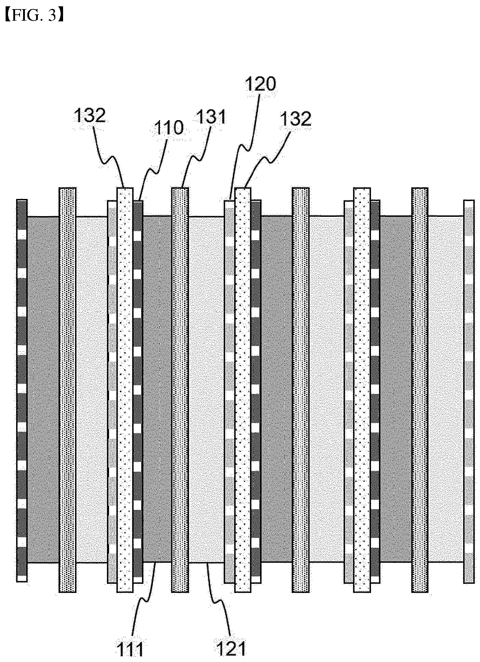

FIG. 1 shows a cross-sectional structure of a manufactured secondary battery. In addition, FIG. 2 is a partially enlarged view of a cross-sectional structure in a horizontal direction of an electrode assembly included in a secondary battery, and FIG. 3 is a partial enlarged view of a cross-sectional structure in a vertical direction of an electrode assembly included in a secondary battery.

Referring to FIG. 1, a secondary battery 100 according to an embodiment of the present invention has a structure in which 50 unit cells are radially assembled around a central axis based on a horizontal cross-sectional structure. In addition, each unit cell has a structure in which the cell thickness decreases in the direction of the central axis from an outer end that forms an outer peripheral surface of the battery based on a horizontal cross-sectional structure.

Referring to FIG. 2, the unit cells constituting the secondary battery have a structure in which a negative electrode current collector 110, a negative electrode mixture layer 111, a first separator 131, a positive electrode mixture layer 121, a positive electrode current collector 120, and a second separator 132 are sequentially stacked. In addition, the negative electrode current collector 110 and the positive electrode current collector 120 have a structure in which through-type holes are formed in the thickness direction. The negative electrode mixture layer 111 and the positive electrode mixture layer 121 each have a structure in which the thickness of the mixture layers 111 and 121 applied on the metal current collectors 110 and 120 decrease and the density increases in the direction of the central axis from the outer end that forms the outer peripheral surface of the battery.

Referring to FIG. 3, in the unit cells constituting the secondary battery, a structure, in which a negative electrode current collector 110, a negative electrode mixture layer 111, a first separator 131, a positive electrode mixture layer 121, a positive electrode current collector 120, and a second separator 132 are sequentially stacked, is repeated. **In** addition, the negative electrode current collector 110 and the positive electrode current collector 120 have a structure in which through-type holes are formed in the thickness direction. A plurality of through-type holes are formed in the negative electrode current collector 110 and the positive electrode current collector 120, and these through-type holes promote smooth flow of lithium ions.

### Example 2

A secondary battery was manufactured in the same manner as in Example 1, except that a current collector having a mesh structure was used for each of the aluminum and copper current collectors.

### Comparative Example 1

A positive electrode and a negative electrode were prepared in the same manner as in Example 1 except that through-thickness holes were not formed in the positive electrode and negative electrode current collectors respectively, and the thickness gradient of the positive electrode and negative electrode mixture layer was not formed.

On the other hand, polypropylene was uniaxially stretched using a dry method to prepare a separator having a microporous structure having a melting point of 165°C and a width of 200 mm on one side. unit cells having a structure in which the first separator was interposed between the positive electrode and the negative electrode, and the second separator was located outside the positive electrode and the negative electrode were repeatedly assembled to prepare an electrode assembly. The electrode assembly has a structure in which 50 unit cells are sequentially assembled.

After the electrode assembly was built into a hollow rectangular battery case, a 1M LiPF₆ carbonate-based solution electrolyte was injected to complete a battery.

### Experimental Example 1: Evaluation of properties of secondary battery

Physical properties were evaluated for each secondary battery prepared in Example 1 and Comparative Example 1. Specifically, charging and discharging were performed for each secondary battery, and voltage and temperature changes during charging and discharging were measured, respectively. Charging and discharging of the secondary battery was performed at 20°C and 1C.

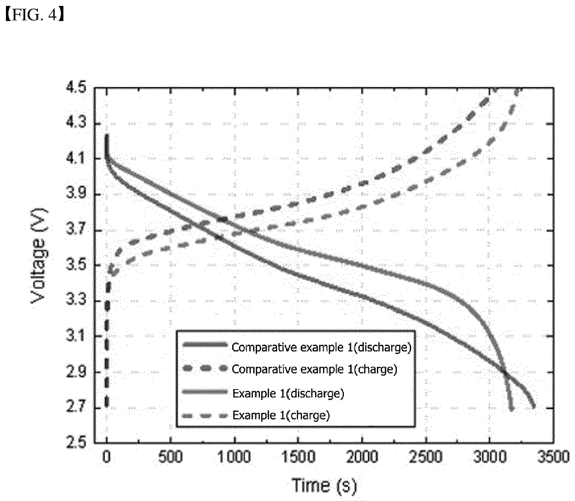

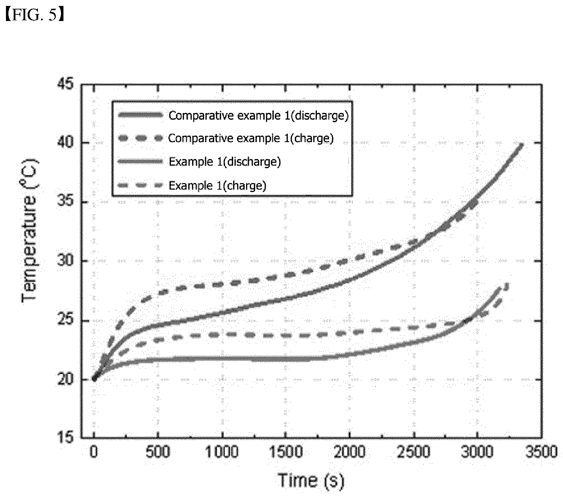

The result of evaluating the voltage change during charging and discharging of the secondary battery is shown in FIG. 4, and the result of evaluating the temperature change during charging and discharging of the secondary battery is shown in FIG. 5.

First, referring to FIG. 4, it can be seen that the secondary battery according to Example 1 has a high discharge voltage and a low charging voltage compared to Comparative Example 1. Through this, it can be seen that the secondary battery according to Example 1 provides higher power when applied to a product, and requires lower charging power when charging.

Referring to FIG. 5, it can be seen that the secondary battery according to Example 1 has a lower temperature during charging and discharging and a remarkably small variation, compared to Comparative Example 1. Accordingly, the secondary battery according to the first embodiment has a lower required cooling performance, and a more compact design is possible.

Therefore, the secondary battery can be applied to various mobile devices, wearable devices, etc., and it is particularly suitable for small devices such as wireless earphones and smart watches, especially devices requiring long-term use while being limited by the weight and volume of a secondary battery.

In addition, since the secondary battery has excellent output, it can be used for power tools that are driven by a battery-based motor and it is suitable for application to electricity storage systems as well as drones, electric vehicles including electric vehicles (EVs), hybrid electric vehicles (HEVs), plug-in hybrid electric vehicles (PHEVs), etc., electric two-wheeled vehicles including electric bicycles (E-bikes) and electric scooters (E-scooters), and transportation means using high-power electricity, such as an electric golf carts.

### <Description of reference numerals>

100: secondary battery
110: negative electrode current collector
111: negative electrode mixture layer
120: positive electrode current collector
121: positive electrode mixture layer
131: first separator
132: second separator

## Claims

1. A secondary battery (100) having a structure in which n unit cells are radially assembled around a central axis based on a horizontal cross-sectional structure,
wherein n is an integer of 5 or more, and
wherein each unit cell has a structure in which a thickness decreases in a direction toward the central axis from an outer end that forms an outer peripheral surface of the secondary battery (100) based on the horizontal cross-sectional structure,
wherein each unit cell comprises a positive electrode and a negative electrode, and each of the positive electrode and the negative electrode has a structure in which a mixture layer (111, 121) including an active material is applied on a metal current collector (110, 120), and
wherein at least one of the positive electrode or the negative electrode has a structure in which a thickness of the mixture layer (111, 121) applied on the metal current collector (110, 120) decreases in a direction toward the central axis from the outer end that forms the outer peripheral surface of the battery, based on the horizontal section structure,
wherein, in each unit cell, at least one of the positive electrode or the negative electrode has a structure in which a density of the mixture layer (111, 121) increases in a direction toward the central axis from the outer end that forms the outer peripheral surface of the battery, based on the horizontal section structure.

2. The secondary battery (100) of claim 1, wherein a k^{th} unit cell and a (k+1)^{th} unit cell are adjacent to each other and face each other,
wherein the k is an integer between 1 and n-1,
wherein a first unit cell and an n^{th} unit cell are also adjacent to each other and face each other, and
wherein the n is an integer between 5 and 10000.

3. The secondary battery (100) of claim 1, wherein the secondary battery (100) has a cylindrical structure in which n unit cells are radially assembled around the central axis to form a hollow based on the horizontal cross-sectional structure,
wherein the n is an integer of 5 or more, and
wherein a diameter ratio of inner and outer diameters of the secondary battery (100) is in a range of 1 : 1.1 to 100.

4. The secondary battery (100) of claim 1, wherein, in each unit cell forming a battery, the ratio (Dᵢₙ : Dₒᵤₜ) of the thickness (Dᵢₙ) of the inner end forming the inner peripheral surface of the battery in the center direction and the thickness (Dₒᵤₜ) of the outer end forming the outer peripheral surface of the battery is in the range of 1 : 1.1 to 100, based on the horizontal cross-sectional structure.

5. The secondary battery (100) of claim 1, wherein each unit cell includes a positive electrode and a negative electrode, and a first separator (131) is interposed between the positive electrode and the negative electrode, and
wherein a second separator (132) is interposed between the unit cells.

6. The secondary battery (100) of claim 5, wherein each of the positive electrode and the negative electrode includes: a current collector (110, 120); and a mixture layer (111, 121) including an active material disposed on the current collector (110, 120) one a surface facing the first separator (131).

7. The secondary battery (100) of claim 1, wherein, in each unit cell, at least one of a positive electrode or a negative electrode includes a metal current collector (110, 120) having a porous structure in which through holes are formed in a thickness direction.

8. The secondary battery (100) of claim 7, wherein, in each unit cell,
an area ratio of the through holes on a surface of the metal current colletor (110, 120) is in a range of 10 to 80%.

9. The secondary battery (100) of claim 7, wherein the metal current collector (110, 120) is in a form of a mesh.

10. A device comprising the secondary battery (100) according to claim 1.

11. The device of claim 10, wherein the device includes a mobile device, a wearable device, a power tool that moves by receiving power by a battery-based motor, a drone, or an Electric Vehicle (EV), a Hybrid Electric Vehicle (HEV), a Plug-in Hybrid Electric Vehicle (PHEV), an Electric Bike (E-bike), an Electric Scooter (E-scooter), an Electric Golf Cart (electric golf cart) or a power storage system.

## Patentansprüche

1. Sekundärbatterie (100), welche eine Struktur aufweist, in welcher n Einheitszellen um eine Mittelachse auf Grundlage einer horizontalen Querschnittsstruktur radial angeordnet sind,
wobei n eine ganze Zahl von 5 oder mehr ist, und
wobei jede Einheitszelle eine Struktur aufweist, in welcher sich eine Dicke in einer Richtung zu der Mittelachse von einem äußeren Ende verringert, welches eine äußere Umfangsfläche der Sekundärbatterie (100) bildet, auf Grundlage der horizontalen Querschnittsstruktur,
wobei jede Einheitszelle eine positive Elektrode und eine negative Elektrode umfasst und jede aus der positiven Elektrode und der negativen Elektrode eine Struktur aufweist, in welcher eine Mischungslage (111, 121), welche ein Aktivmaterial umfasst, auf einen Metallstromkollektor (110, 120) aufgebracht ist, und
wobei wenigstens eine aus der positiven Elektrode oder der negativen Elektrode eine Struktur aufweist, in welcher sich eine Dicke der Mischungslage (111, 121), welche auf den Metallstromkollektor (110, 120) aufgebracht ist, in einer Richtung zu der Mittelachse von dem äußeren Ende verringert, welche die äußere Umfangsfläche der Batterie bildet, auf Grundlage der horizontalen Schnittstruktur,
wobei, in jeder Einheitszelle, wenigstens eine aus der positiven Elektrode oder der negativen Elektrode eine Struktur aufweist, in welcher sich eine Dichte der Mischungslage (111, 121) in einer Richtung zu der Mittelachse von dem äußeren Ende erhöht, welche die äußere Umfangsfläche der Batterie bildet, auf Grundlage der horizontalen Schnittstruktur.

2. Sekundärbatterie (100) nach Anspruch 1, wobei eine kte Einheitszelle und eine (k+1)te Einheitszelle zueinander benachbart sind und einander zugewandt sind,
wobei k eine ganze Zahl zwischen 1 und n-1 ist,
wobei eine erste Einheitszelle und eine nte Einheitszelle auch zueinander benachbart sind und einander zugewandt sind, und
wobei n eine ganze Zahl zwischen 5 und 10000 ist.

3. Sekundärbatterie (100) nach Anspruch 1, wobei die Sekundärbatterie (100) eine zylinderförmige Struktur aufweist, in welcher n Einheitszellen um die Mittelachse radial angeordnet sind, um einen Hohlraum zu bilden, auf Grundlage der horizontalen Querschnittsstruktur,
wobei n eine ganze Zahl von 5 oder mehr ist, und
wobei ein Durchmesserverhältnis von inneren und äußeren Durchmessern der Sekundärbatterie (100) in einer Spanne von 1 : 1,1 bis 100 liegt.

4. Sekundärbatterie (100) nach Anspruch 1, wobei, in jeder Einheitszelle, welche eine Batterie bildet, das Verhältnis (Dᵢₙ : Dₒᵤₜ) der Dicke (Dᵢₙ) des inneren Endes, welches die innere Umfangsfläche der Batterie in der Mittelrichtung bildet, und der Dicke (Dₒᵤₜ) des äußeren Endes, welches die äußere Umfangsfläche der Batterie bildet, in der Spanne von 1 : 1,1 bis 100 liegt, auf Grundlage der horizontalen Querschnittsstruktur.

5. Sekundärbatterie (100) nach Anspruch 1, wobei jede Einheitszelle eine positive Elektrode und eine negative Elektrode umfasst und ein erster Separator (131) zwischen der positiven Elektrode und der negativen Elektrode eingefügt ist, und
wobei ein zweiter Separator (132) zwischen den Einheitszellen eingefügt ist.

6. Sekundärbatterie (100) nach Anspruch 5, wobei jede aus der positiven Elektrode und der negativen Elektrode umfasst: einen Stromkollektor (110, 120); und eine Mischungslage (111, 121), welche ein Aktivmaterial umfasst, welches an dem Stromkollektor (110, 120) an einer Fläche angeordnet ist, welche dem ersten Separator (131) zugewandt ist.

7. Sekundärbatterie (100) nach Anspruch 1, wobei, in jeder Einheitszelle, wenigstens eine positive Elektrode oder eine negative Elektrode einen Metallstromkollektor (110, 120) umfasst, welcher eine poröse Struktur aufweist, in welcher Durchgangslöcher in einer Dickenrichtung gebildet sind.

8. Sekundärbatterie (100) nach Anspruch 7, wobei, in jeder Einheitszelle, ein Flächenverhältnis der Durchgangslöcher an einer Fläche des Metallstromkollektors (110, 120) in einer Spanne von 10 bis 80% liegt.

9. Sekundärbatterie (100) nach Anspruch 7, wobei der Metallstromkollektor (110, 120) in einer Form eines Gitters ist.

10. Vorrichtung, umfassend die Sekundärbatterie (100) nach Anspruch 1.

11. Vorrichtung nach Anspruch 10, wobei die Vorrichtung eine mobile Vorrichtung, eine tragbare Vorrichtung, ein kraftbetriebenes Werkzeug, welches sich durch ein Empfangen einer Leistung durch einen batteriebasierten Motor bewegt, eine Drohne, oder ein elektrisches Fahrzeug (EV), ein hybridelektrisches Fahrzeug (HEV), ein Plug-in hybridelektrisches Fahrzeug (PHEV), ein elektrisches Fahrrad (E-bike), einen elektrischen Roller (E-scooter), einen elektrischen Golfwagen (electric golf cart) oder ein Energiespeichersystem umfasst.

## Revendications

1. Batterie secondaire (100) ayant une structure dans laquelle n cellules unitaires sont assemblées radialement autour d'un axe central sur la base d'une structure en coupe transversale horizontale,
dans laquelle n est un nombre entier égal à 5 ou plus, et
dans laquelle chaque cellule unitaire a une structure dans laquelle une épaisseur diminue dans une direction vers l'axe central à partir d'une extrémité externe qui forme une surface périphérique externe de la batterie secondaire (100) sur la base de la structure en coupe transversale horizontale,
dans laquelle chaque cellule unitaire comprend une électrode positive et une électrode négative, et chacune de l'électrode positive et de l'électrode négative a une structure dans laquelle une couche de mélange (111, 121) comportant un matériau actif est appliquée sur un collecteur de courant métallique (110, 120), et
dans laquelle au moins une parmi l'électrode positive ou l'électrode négative a une structure dans laquelle une épaisseur de la couche de mélange (111, 121) appliquée sur le collecteur de courant métallique (110, 120) diminue dans une direction vers l'axe central à partir de l'extrémité externe qui forme la surface périphérique externe de la batterie, sur la base de la structure en coupe horizontale,
dans laquelle, dans chaque cellule unitaire, au moins une parmi l'électrode positive ou l'électrode négative a une structure dans laquelle une densité de la couche de mélange (111, 121) augmente dans une direction vers l'axe central à partir de l'extrémité externe qui forme la surface périphérique externe de la batterie, sur la base de la structure en coupe horizontale.

2. Batterie secondaire (100) selon la revendication 1, dans laquelle une k^{ème} cellule unitaire et une (k+1)^{ème} cellule unitaire sont adjacentes l'une à l'autre et se font face, dans laquelle k est un nombre entier compris entre 1 et n-1,
dans laquelle une première cellule unitaire et une n^{ème} cellule unitaire sont également adjacentes l'une à l'autre et se font face, et
dans laquelle n est un nombre entier compris entre 5 et 10 000.

3. Batterie secondaire (100) selon la revendication 1, dans laquelle la batterie secondaire (100) a une structure cylindrique dans laquelle n cellules unitaires sont assemblées radialement autour de l'axe central pour former une cavité sur la base de la structure en coupe transversale horizontale,
dans laquelle n est un nombre entier égal à 5 ou plus, et
dans laquelle un rapport de diamètre de diamètres interne et externe de la batterie secondaire (100) est dans une plage de 1: 1,1 à 100.

4. Batterie secondaire (100) selon la revendication 1, dans laquelle, dans chaque cellule unitaire formant une batterie, le rapport (Dᵢₙ: Dₒᵤₜ) entre l'épaisseur (Dᵢₙ) de l'extrémité interne formant la surface périphérique interne de la batterie dans la direction centrale et l'épaisseur (Dₒᵤₜ) de l'extrémité externe formant la surface périphérique externe de la batterie est dans la plage de 1: 1,1 à 100, sur la base de la structure en coupe transversale horizontale.

5. Batterie secondaire (100) selon la revendication 1, dans laquelle chaque cellule unitaire comporte une électrode positive et une électrode négative, et un premier séparateur (131) est interposé entre l'électrode positive et l'électrode négative, et
dans laquelle un second séparateur (132) est interposé entre les cellules unitaires.

6. Batterie secondaire (100) selon la revendication 5, dans laquelle chacune de l'électrode positive et de l'électrode négative comporte : un collecteur de courant (110, 120) ; et une couche de mélange (111, 121) comportant un matériau actif disposé sur le collecteur de courant (110, 120) sur une surface faisant face au premier séparateur (131).

7. Batterie secondaire (100) selon la revendication 1, dans laquelle, dans chaque cellule unitaire, au moins une d'une électrode positive ou d'une électrode négative comporte un collecteur de courant métallique (110, 120) ayant une structure poreuse dans laquelle des trous traversants sont formés dans une direction d'épaisseur.

8. Batterie secondaire (100) selon la revendication 7, dans laquelle, dans chaque cellule unitaire,
un rapport de superficie des trous traversants sur une surface du collecteur de courant métallique (110, 120) est dans une plage de 10 à 80 %.

9. Batterie secondaire (100) selon la revendication 7, dans laquelle le collecteur de courant métallique (110, 120) est sous une forme d'un maillage.

10. Dispositif comprenant la batterie secondaire (100) selon la revendication 1.

11. Dispositif selon la revendication 10, dans lequel le dispositif comporte un dispositif mobile, un dispositif à porter sur soi, un outil motorisé qui se déplace en recevant de l'énergie par un moteur à batterie, un drone, ou un véhicule électrique (EV), un véhicule électrique hybride (HEV), un véhicule électrique hybride rechargeable (PHEV), un vélo électrique (E-bike), une trottinette électrique (E-scooter), une voiturette de golf électrique (electric golf cart) ou un système de stockage d'énergie.
